# EUROPEAN PATENT SPECIFICATION

(11) **EP 3 813 268 B1**
(45) Date of publication and mention of the grant of the patent: **11.10.2023**
(21) Application number: 19818719.7
(22) Date of filing: 05.03.2019
(51) Int. Cl.: H04B 3/32

(54) **SCHEDULING METHOD, APPARATUS, AND COMPUTER STORAGE MEDIUM**
PLANUNGSVERFAHREN, VORRICHTUNG UND COMPUTERSPEICHERMEDIUM
PROCÉDÉ DE PLANIFICATION, APPAREIL, ET SUPPORT DE STOCKAGE INFORMATIQUE

(30) Priority: 11.06.2018 CN 201810592726
(43) Date of publication of application: 28.04.2021
(73) Proprietor: ZTE Corporation, shenzhen Guangdong 518057 (CN)
(72) Inventor: LIU, Zheng, Guangdong 518057 (CN); LU, Liuming, Guangdong 518057 (CN); YUAN, Liquan, Guangdong 518057 (CN)
(74) Representative: Pennacchio, Salvatore Giovanni
(86) International application number: PCT/CN2019/077024
(87) International publication number: WO 2019/237770

(56) References cited:
- CN-A- 1 801 685
- CN-A- 101 409 604
- CN-A- 102 415 040
- US-A1- 2003 086 362
- US-A1- 2003 086 362

## Description

### Technical Field

The present invention relates, but not limited to, a communication technology, and in particular, to a scheduling method and apparatus, and a computer storage medium.

### Background

A Digital Subscriber Line (DSL) technology refers to a high-speed transmission technology for data transmission through twisted pairs. Usually, a pair of twisted pairs (which may be called a line pair), such as a widespread Asymmetrical Digital Subscriber Line (ADSL), is used for connection. In addition, there are also some DSL technologies that support multi-pair twisted pair connections, such as a Single-pair High Speed Digital Subscriber Line (SHDSL).

When both ends of the communication communicate through a DSL, there will be a Near-End CrossTalk (NEXT) and a Far-End CrossTalk (FEXT) on the line. In view of an FEXT phenomenon between different line pairs, the DSL mostly uses a vectoring technology to eliminate the crosstalk. Usually for a down direction, that is, a direction from a Central Office (CO) to a Customer Premise Equipment (CPE), FEXT information precoding is set in a normal sending signal using a mode agreed upon by the CO and the CPE. As a result, a precoded signal and the FEXT cancel each other out during the transmission process, so that the CPE can receive correct information with almost no crosstalk. In the precoding process, an FEXT matrix of a crosstalk channel is usually subjected to matrix decomposition. For example, when a Quadrature Rectangle (QR) or Singular Value Decomposition (SVD) algorithm is used for matrix decomposition, signal energy on a line pair is sorted according to rows and columns in a vector matrix by a specific mathematical processing method.

In the related art, only a single decomposition algorithm can be used in the process of decomposing the FEXT matrix, so that the use efficiency of crosstalk elimination aiming at FEXT is low, and the user experience is influenced.

Document US 2003/0086362 A1 relates to the removal of crosstalk interference in a communication system.

Document CN 1 801 685 A relates to a layered time-space detection method.

### Summary

In view of this, embodiments of the present invention aim to provide a scheduling method and apparatus, and a computer storage medium, which can improve the use efficiency of crosstalk elimination aiming at FEXT.

The present disclosure is defined by appended independent claims, the dependent claims constitute embodiment of the invention.

The scheduling method and apparatus and the computer storage medium provided by the embodiments of the present invention are applied; before matrix decomposition, the FEXT precoding matrix is rearranged based on the acquired scheduling policy, so that the matrix decomposition can adapt to different optimization targets, and the use efficiency is improved.

### Brief Description of the Drawings

Fig. 1 is a schematic diagram of a DSL system deployment Scenario according to an embodiment of the present invention;
Fig. 2 is a schematic diagram of architecture according to an embodiment of the present invention;
Fig. 3 is another schematic diagram of architecture according to an embodiment of the present invention;
Fig. 4 is a schematic flowchart of a scheduling method according to an embodiment of the present invention;
Fig. 5 is a schematic implementation flowchart of a scheduling method according to an embodiment of the present invention;
Fig. 6 is a schematic structural diagram of a message field according to an embodiment of the present invention;
Fig. 7 is a schematic implementation flowchart of another scheduling method according to an embodiment of the present invention;
Fig. 8 is a schematic structural diagram of another message field according to an embodiment of the present invention;
Fig. 9 is a schematic implementation flowchart of yet another scheduling method according to an embodiment of the present invention;
Fig. 10 is a schematic structural diagram of yet another message field according to an embodiment of the present invention;
Fig. 11 is a schematic implementation flowchart of a further scheduling method according to an embodiment of the present invention;
Fig. 12 is a schematic structural diagram of a further message field according to an embodiment of the present invention;
Fig. 13 is a schematic composition diagram of a scheduling apparatus according to an embodiment of the present invention; and
Fig. 14 is a schematic diagram of a hardware structure of a scheduling apparatus according to an embodiment of the present invention.

### Detailed Description of the Embodiments

The present invention will be further described in detail below with reference to the accompanying drawings and embodiments. It is to be understood that the specific embodiments described herein are merely illustrative of the present invention and are not intended to limit the present invention.

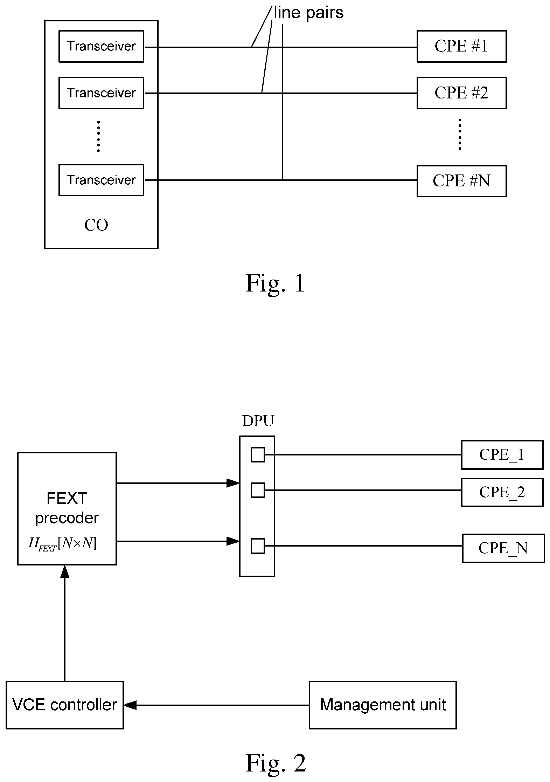

Fig. 1 shows a schematic deployment Scenario of a DSL system that can apply the technical solution of this application. In the system Scenario, N CPEs are included. Each CPE is connected to a transceiver in a CO through a dedicated line pair. Usually in a down direction, the CO may precode an FEXT into a normal sending signal in a precoded form, thereby enabling the precoded signal to cancel the FEXT during downlink transmission, so that the CPE receives a correct signal with almost no crosstalk. Based on the above-described deployment Scenario, in the related art, the precoding cancellation of the FEXT is generally performed using the precoding processing architecture shown in Fig. 2. It is to be understood that the architecture shown in Fig. 2 may be applied to a CO side in the Scenario shown in Fig. 1, and may be provided as a separate network device at the CO side or as a communication apparatus coupled to a device at the CO side, which will not be described in detail in the present embodiment.

As can be seen from Fig. 2, the architecture may include: a Management Element (ME), a Vectoring Control Entity (VCE) controller, an FEXT precoder, and a Distribution Point Unit (DPU). The VCE controller transmits a channel estimation matrix H_{FEXT} [NxN] to the FEXT precoder; the FEXT precoder generates a precoding matrix aiming at the FEXT according to the channel estimation matrix so as to perform FEXT pre-elimination aiming at a sending signal; and then, the sending signal completing the pre-elimination is sent to each CPE through a transmitter in the DPU.

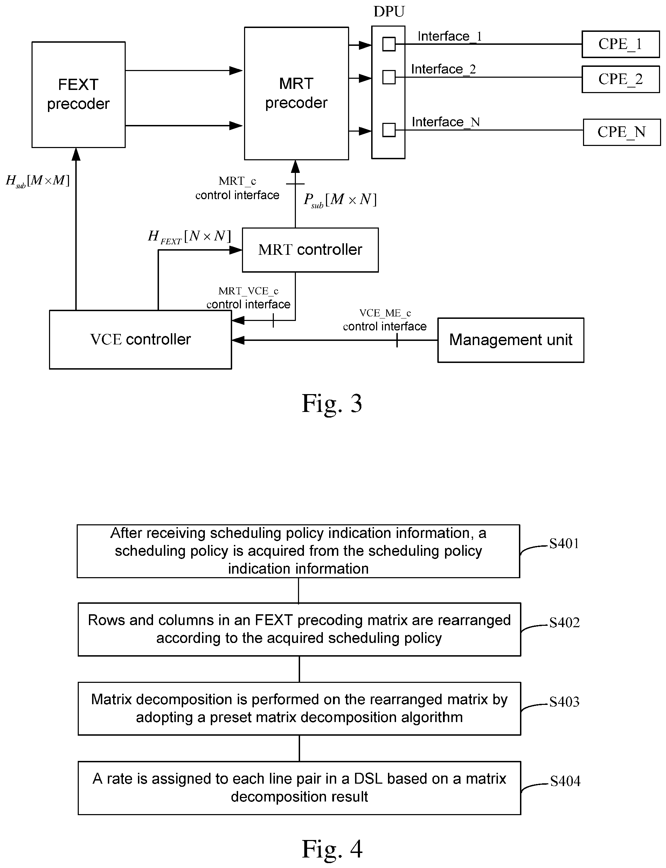

Based on the deployment Scenario shown in Fig. 1 and the architecture proposed in the related art shown in Fig. 2, in the architecture shown in Fig. 2, a Multi-Remote Terminal (MRT) controller and an MRT precoder are additionally added to an MRT in the embodiment of the present invention to obtain a new precoding processing architecture shown in Fig. 3. In the architecture shown in Fig. 3, the MRT controller is not only connected to a VCE controller, but also connected to the MRT precoder, and the MRT precoder is connected to the FEXT precoder. Additional interfaces between components are shown in Fig. 3 and will not be described in detail herein. It will be appreciated that the precoding architecture shown in Fig. 3 may still be provided at the CO side as a separate network device or as a communication apparatus coupled to a network device at the CO side. The present embodiment will not be described in detail.

In an embodiment, Fig. 4 shows a scheduling method according to an embodiment of the present invention. The method may be applied to a VCE controller in a network device or communication apparatus adopting the architecture as shown in Fig. 3. The method may include the following steps.

In S401, after receiving scheduling policy indication information, a scheduling policy is acquired from the scheduling policy indication information.

In S402, rows and columns in an FEXT precoding matrix are rearranged according to the acquired scheduling policy.

In S403, matrix decomposition is performed on the rearranged matrix by adopting a preset matrix decomposition algorithm.

In S404, a rate is assigned to each line pair in a DSL based on a matrix decomposition result.

Based on the technical solution as shown in Fig. 4, before matrix decomposition, the FEXT precoding matrix is rearranged based on the acquired scheduling policy, so that the matrix decomposition can adapt to different optimization targets, and the use efficiency is improved.

Aiming at the technical solution shown in Fig. 4, in combination with the architecture shown in Fig. 3, the operation that a scheduling policy is acquired from the scheduling policy indication information after receiving scheduling policy indication information includes: a message field carrying the scheduling policy indication information sent by an ME is received; and the scheduling policy is acquired based on the scheduling policy indication information in the message field.

In detail, the scheduling policy may be determined by a network management system of an operator and learned by the ME from the network management system at the CO side; the determined scheduling policy is sent to the VCE controller through a VCE_ME_c interface by using the ME in Fig. 3; the VCE controller may rearrange rows and columns of the FEXT precoding matrix according to the scheduling policy; it is additionally noted that if the scheduling policy involves MRT groups after grouping line pairs, the MRT controller may send a line pair index number contained in each group to the VCE controller through an MRT_VCE_c interface so that the VCE controller rearranges the FEXT precoding matrix according to the groups and the scheduling policy involving the groups.

In order to be able to explain the technical solution of the embodiments of the present invention in detail, the scheduling method shown in the Fig. 4 is respectively illustrated by combining application scenarios of different scheduling policies.

### Scenario one

If content corresponding to the scheduling policy is scheduling according to a priority order of MRT groups, in a possible implementation manner, the operation that rows and columns in an FEXT precoding matrix are rearranged according to the acquired scheduling policy includes: a line pair index number included in each MRT group is acquired; and rows and columns of an FEXT precoding matrix HFEXT are rearranged based on the priority order of MRT groups and the line pair index number included in each MRT group.

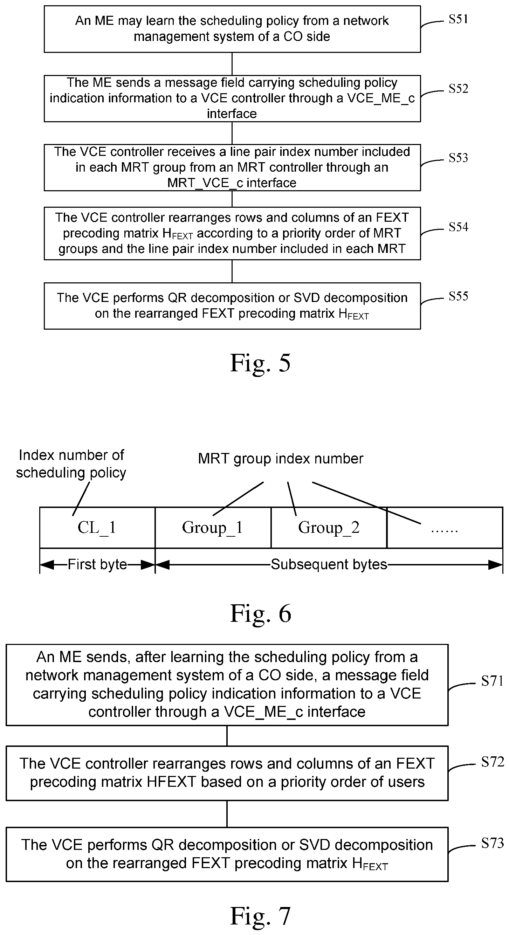

Then, aiming at the implementation manner, the technical solution shown in Fig. 4 may include the following steps in the implementation process as shown in Fig. 5.

In S51, an ME may learn the scheduling policy from a network management system of a CO side.

In S52, the ME sends a message field carrying scheduling policy indication information to a VCE controller through a VCE_ME_c interface.

In practical applications, the message field may be part of a management message sent by the ME. The message field may indicate both the scheduling policy learned in step S1 and the priority order of MRT groups in the scheduling policy. For example, with reference to the message field shown in Fig. 6, an index number of the scheduling policy may be filled in the first byte of the message field. For example, the index number of the scheduling policy is " CL_1 ", it needs to be explained that the index number may be issued by the network management system in advance, and each index number corresponds to a scheduling policy respectively, so that the corresponding scheduling policy can be learned according to the index number; subsequently, in subsequent bytes of the message field, the index numbers of MRT groups are filled according to the priority order of MRT groups. Taking Fig. 3 as an example, it is supposed that a total number of line pairs N=3, the number of MRT groups M=2, CPE_1 and CPE_3 are active user terminals, line pair 1 and line 3 are line pairs where active users are located, CPE_2 is an idle user terminal, line pair 2 is a line pair where the idle user is located, the MRT controller determines that line pair 1 and line pair 2 are assigned to group group_1, and line pair 3 is assigned to group_2. Based on this, if the priority of group group_1 is higher than that of group group_2, the subsequent bytes of the message field will sequentially fill in the MRT group index numbers in the priority order, namely group_1 and group_2; if the priority of group group_2 is higher than that of group group_1, the subsequent bytes of the message field will sequentially fill in the MRT group index numbers in the priority order, namely group_2 and group_1. In Fig. 6, it is illustrated that the priority of group group_1 is higher than that of group group_2.

It should be understood that through S1 and S2, the process of acquiring the scheduling policy is realized, and then the VCE controller can rearrange the FEXT precoding matrix according to the acquired scheduling policy.

In S53, the VCE controller receives a line pair index number included in each MRT group from an MRT controller through an MRT_VCE_c interface.

In S54, the VCE controller rearranges rows and columns of an FEXT precoding matrix H_{FEXT} according to a priority order of MRT groups and the line pair index number included in each MRT.

Still taking the above group as an example, if the priority of group group_1 is higher than that of group group_2, the VCE controller sequentially executes the following steps:
moving a corresponding row of line pair 1 in H_{FEXT} to the first row and moving a corresponding column of line pair 1 in H_{FEXT} to the first column;
moving a corresponding row of line pair 2 in H_{FEXT} to the second row and moving a corresponding column of line pair 2 in H_{FEXT} to the second column; and
moving a corresponding row of line pair N in H_{FEXT} to the Nth row and moving a corresponding column of line pair N in H_{FEXT} to the Nth column.

If the priority of group group_2 is higher than that of group group_1, the VCE controller sequentially executes the following steps:
moving a corresponding row of line pair N in H_{FEXT} to the first row and moving a corresponding column of line pair N in H_{FEXT} to the first column;
moving a corresponding row of line pair 1 in H_{FEXT} to the second row and moving a corresponding column of line pair 1 in H_{FEXT} to the second column; and
moving a corresponding row of line pair 2 in H_{FEXT} to the N^{th} row and moving a corresponding column of line pair 2 in H_{FEXT} to the N^{th} column.

Through the above process, the rearrangement of the FEXT precoding matrix H_{FEXT} is completed.

In S55, the VCE performs QR decomposition or SVD decomposition on the rearranged FEXT precoding matrix H_{FEXT}.

It should be noted that after matrix decomposition is completed for the rearranged FEXT precoding matrix H_{FEXT}, in a diagonal matrix obtained by the decomposition, indicated signal energy is also arranged according to the priority order of MRT groups, so that scheduling according to the priority order of MRT groups can be achieved when performing rate scheduling based on the matrix decomposition result.

It should be understood that the process described in this Scenario is described by taking two MRT groups as an example. Those skilled in the art can apply the solution to more MRT groups according to the above process, which is not described in detail in the present embodiment.

### Scenario two

If content corresponding to the scheduling policy is scheduling according to a priority order of users, in a possible implementation manner, the operation that rows and columns in an FEXT precoding matrix are rearranged according to the acquired scheduling policy includes: rows and columns of an FEXT precoding matrix H_{FEXT} are rearranged based on the priority order of users.

Then, aiming at the implementation manner, the technical solution shown in Fig. 4 may include the following steps in the implementation process as shown in Fig. 7.

In S71, an ME sends, after learning the scheduling policy from a network management system of a CO side, a message field carrying scheduling policy indication information to a VCE controller through a VCE_ME_c interface.

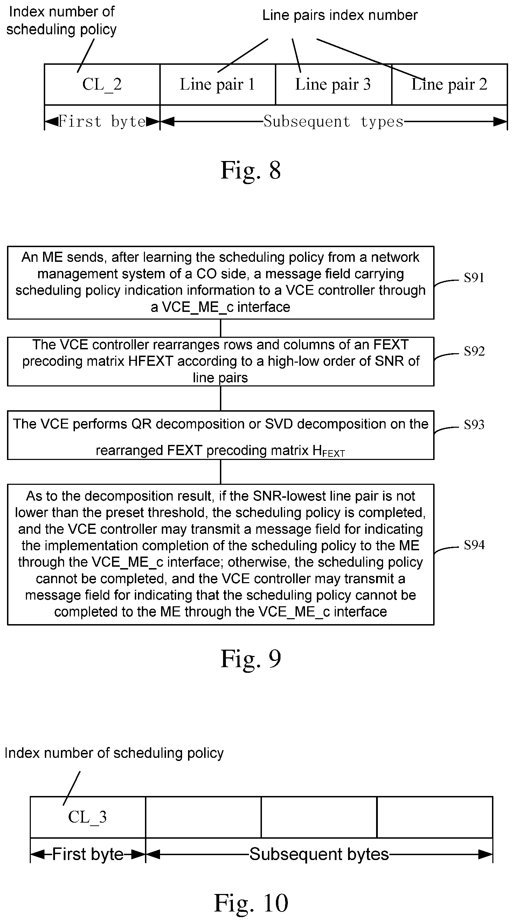

In practical applications, the message field may be used as part of a management message sent by the ME. The message field may indicate the scheduling policy learned in step S1, or the priority order of users in the scheduling policy. Each user corresponds to a line pair, and the priority order of users may be referred to by the order of the line pairs. For example, referring to the message field shown in Fig. 8, the index number of the scheduling policy may be filled in the first byte of the message field to indicate the scheduling policy. For example, the index number of the scheduling policy is "CL_2". Each index number corresponds to a scheduling policy, so that the VCE can learn the corresponding scheduling policy according to the index number. Still taking the settings in the foregoing Scenario as an example, CPE_1 and CPE_3 are active user terminals, line pair 1 and line pair 3 are line pairs where active users are located, CPE_2 is an idle user terminal, and line pair 2 is a line pair where the idle user is located. Then, when the priority order of users is CPE_1 , CPE_3, and CPE_2, the subsequent bytes of the message field may be filled with corresponding line pair index numbers in sequence according to the priority order, namely line pair 1, line pair 3 and line pair 2.

In S72, the VCE controller rearranges rows and columns of an FEXT precoding matrix HFEXT based on a priority order of users.

Taking the above user priority as an example, the VCE controller sequentially executes the following steps:
moving a corresponding row of line pair 1 in H_{FEXT} to the first row and moving a corresponding column of line pair 1 in H_{FEXT} to the first column;
moving a corresponding row of line pair 3 in H_{FEXT} to the second row and moving a corresponding column of line pair 3 in H_{FEXT} to the second column; and
moving a corresponding row of line pair 2 in H_{FEXT} to the last row and moving a corresponding column of line pair 2 in H_{FEXT} to the last column.

Through the above process, the rearrangement of the FEXT precoding matrix H_{FEXT} is completed.

In S73, the VCE performs QR decomposition or SVD decomposition on the rearranged FEXT precoding matrix H_{FEXT}.

It should be noted that after matrix decomposition is completed for the rearranged FEXT precoding matrix H_{FEXT}, in a diagonal matrix obtained by the decomposition, indicated signal energy is also arranged according to the priority order of users, so that scheduling according to the priority order of users can be achieved when performing rate scheduling based on the matrix decomposition result.

It should be understood that the process described in this Scenario is described by taking three users as an example. Those skilled in the art can apply the solution to more users according to the above process, which is not described in detail in the present embodiment.

### Scenario three

If content corresponding to the scheduling policy is that the lowest rate of the user is higher than a preset threshold value, in a possible implementation manner, the operation that rows and columns in an FEXT precoding matrix are rearranged according to the acquired scheduling policy includes:
rows and columns of an FEXT precoding matrix H_{FEXT} are rearranged according to a high-low order of Signal-to-Noise Ratio (SNR) of line pairs.

For the above implementation manner, after assigning a rate to each line pair in a DSL based on a matrix decomposition result, the method further includes:
based on the matrix decomposition result, a message field for indicating the implementation completion of the scheduling policy is transmitted to the ME if the SNR-lowest line pair is not lower than a preset threshold value; otherwise, a message field for indicating that the scheduling policy cannot be completed is transmitted to the ME.

Then, aiming at the implementation manner, the technical solution shown in Fig. 4 may include the following steps in the implementation process as shown in Fig. 9.

In S91, an ME sends, after learning the scheduling policy from a network management system of a CO side, a message field carrying scheduling policy indication information to a VCE controller through a VCE_ME_c interface.

In practical applications, the ME cannot learn rate-related parameters of each line pair such as an SNR, so the message field may only indicate the scheduling policy. The message field shown in Fig. 10 may be filled with the index number of the scheduling policy only in the first byte, such as "CL_3". The subsequent bytes may be left blank. Since each index number corresponds to a scheduling policy, the VCE can learn the corresponding scheduling policy according to the index number.

In S92, the VCE controller rearranges rows and columns of an FEXT precoding matrix H_{FEXT} according to a high-low order of SNR of line pairs.

In practical applications, the line pair SNR order may be from low to high, or from high to low. This application takes low to high as an example. The VCE may sequentially executes the following steps:
moving a corresponding row of an SNR-lowest line pair in H_{FEXT} to the first row and moving a corresponding column of the SNR-lowest line pair in H_{FEXT} to the first column;
moving a corresponding row of an SNR-second lowest line pair in H_{FEXT} to the second row and moving a corresponding column of the SNR-second lowest line pair in H_{FEXT} to the second column; and
by analogy, moving a corresponding row of an SNR-highest line pair in H_{FEXT} to the last row and moving a corresponding column of the SNR-highest line pair in H_{FEXT} to the last column.

Through the above process, the rearrangement of the FEXT precoding matrix H_{FEXT} is completed.

In S93, the VCE performs QR decomposition or SVD decomposition on the rearranged FEXT precoding matrix H_{FEXT}.

In S94, for a decomposition result, if the SNR-lowest line pair is not lower than the preset threshold, the scheduling policy is completed, and the VCE controller may transmit a message field for indicating the implementation completion of the scheduling policy to the ME through the VCE_ME_c interface; otherwise, the scheduling policy cannot be completed, and the VCE controller may transmit a message field for indicating that the scheduling policy cannot be completed to the ME through the VCE_ME_c interface.

It should be understood that the process described in this scenario is described by taking three line pairs as an example. Those skilled in the art can apply the solution to more line pairs according to the above process, which is not described in detail in the present embodiment.

### Scenario four

If content corresponding to the scheduling policy is scheduling according to a maximum overall capacity of all line pairs, in a possible implementation manner, the operation that rows and columns in an FEXT precoding matrix are rearranged according to the acquired scheduling policy includes:
when the FEXT precoding matrix H_{FEXT} has line pairs that do not bear the number of bits and has line pairs that bear the number of bits more than the maximum bearable number of bits, rows and columns of the FEXT precoding matrix H_{FEXT} are rearranged according to the high-low order of SNR and the order of whether the number of bits is borne or not; and
when the FEXT precoding matrix H_{FEXT} does not have line pairs that do not bear the number of bits or does not have line pairs that bear the number of bits more than the maximum bearable number of bits, rows and columns of the FEXT precoding matrix H_{FEXT} are not rearranged.

For the implementation manner, after assigning a rate to each line pair in a DSL based on a matrix decomposition result, the method further includes:
based on the matrix decomposition result, a message field for indicating the implementation completion of the scheduling policy is transmitted to the ME if the FEXT precoding matrix H_{FEXT} does not have line pairs that do not bear the number of bits and does not have line pairs that bear the number of bits more than the maximum bearable number of bits; otherwise, a message field for indicating that the scheduling policy cannot be completed is transmitted to the ME.

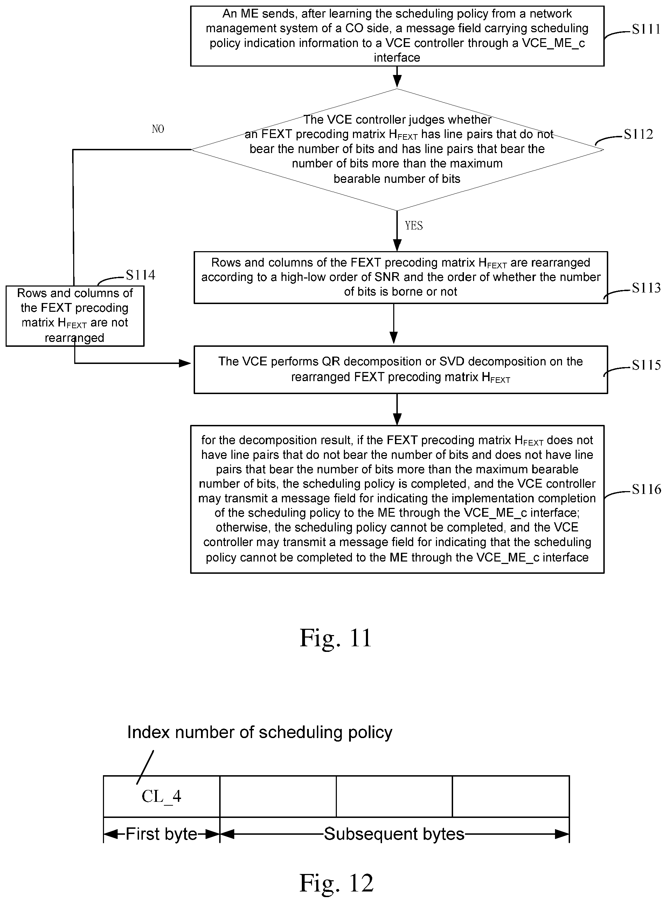

Then, aiming at the implementation manner, the technical solution shown in Fig. 4 may include the following steps in the implementation process as shown in Fig. 11.

In S111, an ME sends, after learning the scheduling policy from a network management system of a CO side, a message field carrying scheduling policy indication information to a VCE controller through a VCE_ME_c interface.

In practical applications, the ME cannot learn how to arrange the line pairs, so the message field may only indicate the scheduling policy. The message field shown in Fig. 12 may be filled with the index number of the scheduling policy only in the first byte, such as "CL_4". The subsequent bytes may be left blank. Since each index number corresponds to a scheduling policy, the VCE can learn the corresponding scheduling policy according to the index number.

In S112, the VCE controller judges whether an FEXT precoding matrix H_{FEXT} has line pairs that do not bear the number of bits and has line pairs that bear the number of bits more than the maximum bearable number of bits, if yes, the process proceeds to S113, otherwise, the process proceeds to S114.

In S113, rows and columns of the FEXT precoding matrix H_{FEXT} are rearranged according to a high-low order of SNR and the order of whether the number of bits is borne or not.

In an embodiment, the VCE may sequentially execute the following steps:
moving a corresponding row of an SNR-lowest line pair that does not bear the number of bits in H_{FEXT} to the first row and moving a corresponding column of the SNR-lowest line pair in H_{FEXT} to the first column;
moving a corresponding row of an SNR-second lowest line pair in H_{FEXT} to the second row and moving a corresponding column of the SNR-second lowest line pair in H_{FEXT} to the second column; and
by analogy, moving a corresponding row of an SNR-highest line pair in H_{FEXT} to the last row and moving a corresponding column of the SNR-highest line pair in H_{FEXT} to the last column.

In S114, rows and columns of the FEXT precoding matrix H_{FEXT} are not rearranged.

In S115, the VCE performs QR decomposition or SVD decomposition on the rearranged FEXT precoding matrix H_{FEXT}.

In S116, for a decomposition result, if the FEXT precoding matrix H_{FEXT} does not have line pairs that do not bear the number of bits and does not have line pairs that bear the number of bits more than the maximum bearable number of bits, the scheduling policy is completed, and the VCE controller may transmit a message field for indicating the implementation completion of the scheduling policy to the ME through the VCE_ME_c interface; otherwise, the scheduling policy cannot be completed, and the VCE controller may transmit a message field for indicating that the scheduling policy cannot be completed to the ME through the VCE_ME_c interface.

The technical solution shown in Fig. 4 is described in detail through the application Scenarios of the four scheduling policies. Through the above solution, before matrix decomposition, the FEXT precoding matrix is rearranged based on the acquired scheduling policy, so that the matrix decomposition can adapt to different optimization targets, and the use efficiency is improved.

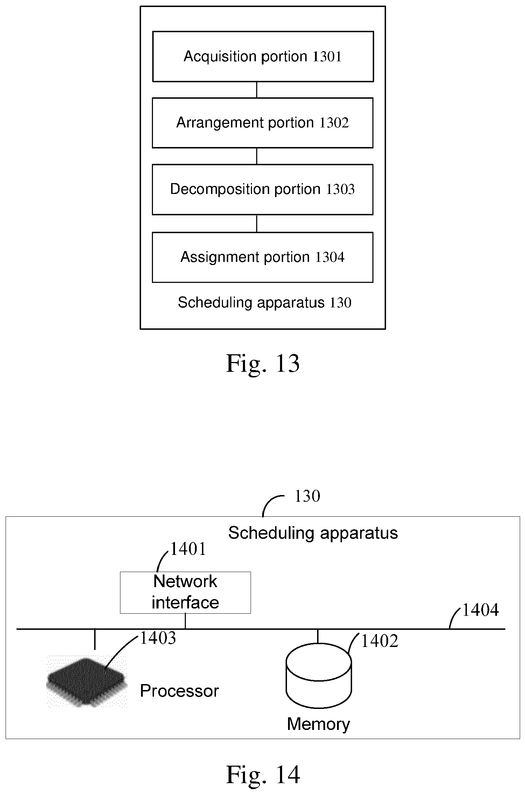

Based on the same inventive concept of an embodiment, referring to Fig. 13, a composition of a scheduling apparatus 130 provided by an embodiment of the present invention is shown, which may include: an acquisition portion 1301, an arrangement portion 1302, a decomposition portion 1303, and an assignment portion 1304.

The acquisition portion 1301 is configured to acquire, after receiving scheduling policy indication information, a scheduling policy from the scheduling policy indication information.

The arrangement portion 1302 is configured to rearrange rows and columns in an FEXT precoding matrix according to the scheduling policy acquired by the acquisition portion 1301.

The decomposition portion 1303 is configured to perform matrix decomposition on the rearranged matrix by adopting a preset matrix decomposition algorithm.

The assignment portion 1304 is configured to assign a rate to each line pair in a DSL based on a matrix decomposition result.

In combination with the structure shown in Fig. 3, the scheduling apparatus 130 may correspond to a VCE controller shown in Fig. 3.

In the embodiment, the acquisition portion 1301 is configured to: receive a message field carrying the scheduling policy indication information sent by an ME, the scheduling policy being learned by a network management system of a CO side; and acquire the scheduling policy based on the scheduling policy indication information in the message field.

In an embodiment, the arrangement portion 1302 is configured to acquire a line pair index number included in each MRT group; and rearrange rows and columns of an FEXT precoding matrix H_{FEXT} based on the priority order of MRT groups and the line pair index number included in each MRT group.

In an embodiment, the arrangement portion 1302 is configured to rearrange rows and columns of an FEXT precoding matrix H_{FEXT} based on the priority order of users.

In an embodiment, the arrangement portion 1302 is configured to rearrange rows and columns of an FEXT precoding matrix H_{FEXT} according to a high-low order of SNR of line pairs.

In the preferred example, the decomposition portion 1303 is further configured to: transmit, based on the matrix decomposition result, a message field for indicating the implementation completion of the scheduling policy to the ME if the SNR-lowest line pair is not lower than a preset threshold value; otherwise, transmit a message field for indicating that the scheduling policy cannot be completed to the ME.

In an embodiment, the arrangement portion 1302 is configured to:
when the FEXT precoding matrix H_{FEXT} has line pairs that do not bear the number of bits and has line pairs that bear the number of bits more than the maximum bearable number of bits, rearrange rows and columns of the FEXT precoding matrix H_{FEXT} according to the high-low order of SNR and the order of whether the number of bits is borne or not; and
when the FEXT precoding matrix H_{FEXT} does not have line pairs that do not bear the number of bits or does not have line pairs that bear the number of bits more than the maximum bearable number of bits, not rearrange rows and columns of the FEXT precoding matrix H_{FEXT}.

In an embodiment, the decomposition portion 1303 is further configured to: transmit, based on the matrix decomposition result, a message field for indicating the implementation completion of the scheduling policy to the ME if the FEXT precoding matrix H_{FEXT} does not have line pairs that do not bear the number of bits and does not have line pairs that bear the number of bits more than the maximum bearable number of bits; otherwise, transmit a message field for indicating that the scheduling policy cannot be completed to the ME.

In combination with the components of the above scheduling apparatus 130 and the correspondence between the components in the architecture of Fig. 3, the scheduling apparatus 130 can rely on its components to implement the solution described in the previous embodiments. The present embodiment will not be described in detail.

It should be understood that in the present embodiment, "part" may be part of a circuit, part of a processor, part of a program or software, or the like, but may be a unit or may be modular or non-modular.

In addition, each component in the present embodiment may be integrated into a processing unit, each unit may also physically exist independently, and two or more than two units may also be integrated into a unit. The integrated unit may be implemented in a hardware form and may also be implemented in form of software functional module.

The integrated unit may be stored in a computer-readable storage medium if it is implemented in the form of a software functional module that is not sold or used as a stand-alone product. Based on such an understanding, the technical solution of the present embodiment, which is essential or contributes to the conventional art, may be embodied in the form of a software product. The computer software product is stored in a storage medium, including a number of instructions for causing a terminal device (which may be a personal computer, a server, or a network device, etc.) or a processor to perform all or part of the steps of the methods described in the present embodiment. The foregoing storage medium includes: a U disk, a mobile hard disk, a Read Only Memory (ROM), a Random Access Memory (RAM), a magnetic disk, or an optical disk, and other media, which may store a program code.

Therefore, the present embodiment provides a computer storage medium. The computer storage medium stores a scheduling program which, when executed by at least one processor, implements the steps of the method in the first embodiment.

Based on the above scheduling apparatus 130 and computer storage medium, referring to Fig. 14, a hardware structure of a scheduling apparatus 130 provided by an embodiment of the present invention is shown, which may include: a network interface 801, a memory 1402, and a processor 1403. The various components are coupled together by a bus system 1404. As can be appreciated, the bus system 1404 is configured to enable connection communication between these components. The bus system 1404 includes, in addition to a data bus, a power bus, a control bus, and a status signal bus. However, for clarity of illustration, the various buses are labeled as the bus system 1404 in Fig. 4. The network interface 1401 is configured to receive and send signals in the process of receiving and sending information with other external network elements.

The memory 1402 is configured to store a computer program capable of running on the processor 1403.

The processor 1403 is configured to perform the following steps when the computer program is run:
after receiving scheduling policy indication information, a scheduling policy is acquired from the scheduling policy indication information;
rows and columns in an FEXT precoding matrix are rearranged according to the acquired scheduling policy;
matrix decomposition is performed on the rearranged matrix by adopting a preset matrix decomposition algorithm; and
a rate is assigned to each line pair in a DSL based on a matrix decomposition result.

It is to be understood that the memory 1402 in the embodiments of the present invention may be a volatile memory or a non-volatile memory, or may include both a volatile memory and a non-volatile memory. The non-volatile memory may be a ROM, a Programmable ROM (PROM), an Erasable PROM (EPROM), an Electrically EPROM (EEPROM), or a flash memory. The volatile memory may be a RAM that acts as an external cache. By way of illustration and not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DRRAM). The memory 1402 of the system and method described herein is intended to include, but is not limited to, these and any other suitable types of memory.

The processor 1403 may be an integrated circuit chip with signal processing capability. In the implementation process, each step of the above method may be completed by an integrated logic circuit of hardware in the processor 1403 or an instruction in the form of software. The above processor 1403 may be a general-purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods, steps, and logical block diagrams disclosed in the embodiments of the present invention may be implemented or executed. The general purpose processor may be a microprocessor, or the processor may also be any conventional processor, etc. The steps of the method disclosed in connection with the embodiments of the present invention may be directly implemented as being completely performed by a hardware decoding processor or completely performed by a combination of hardware and software modules in the decoding processor. The software module may be located in a mature storage medium in the field such as a RAM, a flash memory, a ROM, a PROM, or an EEPROM, and a register. The storage medium is located in the memory 1402, and the processor 1403 reads information in the memory 1402 and completes the steps of the foregoing method in combination with hardware thereof.

It should be understood that the embodiments described herein may be implemented by hardware, software, firmware, middleware, microcode, or a combination thereof. For hardware implementation, the processing unit may be implemented in one or more ASICs, DSPs, DSP Devices (DSPD), Programmable Logic Devices (PLD), FPGAs, general-purpose processors, controllers, microcontrollers, microprocessors, and other electronic units or combinations thereof for performing the functions described in this application.

For software implementation, the technology described herein may be implemented through modules (such as procedures and functions) that perform the functions described herein. The software code may be stored in the memory and executed by the processor. The memory may be implemented in the processor or external to the processor.

In an embodiment, the processor 1403 in the scheduling apparatus 130 is further configured to execute the method steps described in the first embodiment when running the computer program, and details are not described herein again.

A person skilled in the art should understand that the embodiments of the present invention may be provided as a method, a system or a computer program product. Thus, forms of hardware embodiments, software embodiments or embodiments integrating software and hardware may be adopted in the present invention. Moreover, the present invention may adopt the form of a computer program product implemented on one or more computer available storage media (including, but not limited to, a disk memory, a CD-ROM, an optical memory and the like) containing computer available program codes.

The present invention is described with reference to flowcharts and/or block diagrams of the method, the device (system) and the computer program product according to the embodiments of the present invention. It is to be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a dedicated computer, an embedded processor or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

## Claims

1. A scheduling method, comprising:
acquiring (S401), after receiving scheduling policy indication information, a scheduling policy from the scheduling policy indication information;
rearranging (S402) rows and columns in a Far-End CrossTalk, FEXT, precoding matrix according to the acquired scheduling policy;
performing (S403) matrix decomposition on the rearranged matrix by adopting a preset matrix decomposition algorithm; and
assigning (S404) a rate to each line pair in a Data Subscriber Line, DSL, based on a matrix decomposition result;
wherein acquiring, after receiving scheduling policy indication information, a scheduling policy from the scheduling policy indication information comprises: receiving a message field carrying the scheduling policy indication information sent by a Management Element, ME; and acquiring the scheduling policy based on the scheduling policy indication information in the message field.

2. The method according to claim 1, wherein content corresponding to the scheduling policy is scheduling according to a priority order of Multi-Remote Terminal, MRT, groups, and rearranging rows and columns in an FEXT precoding matrix according to the acquired scheduling policy comprises:
acquiring a line pair index number included in each MRT group; and
rearranging rows and columns of an FEXT precoding matrix H_{FEXT} based on the priority order of MRT groups and the line pair index number included in each MRT group.

3. The method according to claim 1, wherein content corresponding to the scheduling policy is scheduling according to a priority order of users, and rearranging rows and columns in an FEXT precoding matrix according to the acquired scheduling policy comprises:
rearranging rows and columns of an FEXT precoding matrix H_{FEXT} based on the priority order of users.

4. The method according to claim 1, wherein content corresponding to the scheduling policy is that the lowest rate of the user is higher than a preset threshold value, and rearranging rows and columns in an FEXT precoding matrix according to the acquired scheduling policy comprises:
rearranging rows and columns of an FEXT precoding matrix H_{FEXT} according to a high-low order of Signal-to-Noise Ratio, SNR, of line pairs.

5. The method according to claim 4, wherein after assigning a rate to each line pair in a DSL based on a matrix decomposition result, the method further comprises:
transmitting, based on the matrix decomposition result, a message field for indicating the implementation completion of the scheduling policy to the ME if the SNR-lowest line pair is not lower than a preset threshold value; otherwise, transmitting a message field for indicating that the scheduling policy cannot be completed to the ME.

6. The method according to claim 1, wherein content corresponding to the scheduling policy is scheduling according to a maximum overall capacity of all line pairs, and rearranging rows and columns in an FEXT precoding matrix according to the acquired scheduling policy comprises:
when the FEXT precoding matrix H_{FEXT} has line pairs that do not bear the number of bits and has line pairs that bear the number of bits more than the maximum bearable number of bits, rearranging rows and columns of the FEXT precoding matrix H_{FEXT} according to the high-low order of SNR and the order of whether the number of bits is borne or not; and
when the FEXT precoding matrix H_{FEXT} does not have line pairs that do not bear the number of bits or does not have line pairs that bear the number of bits more than the maximum bearable number of bits, not rearranging rows and columns of the FEXT precoding matrix H_{FEXT}.

7. The method according to claim 6, wherein after assigning a rate to each line pair in a DSL based on a matrix decomposition result, the method further comprises:
transmitting, based on the matrix decomposition result, a message field for indicating the implementation completion of the scheduling policy to the ME if the FEXT precoding matrix H_{FEXT} does not have line pairs that do not bear the number of bits and does not have line pairs that bear the number of bits more than the maximum bearable number of bits; otherwise, transmitting a message field for indicating that the scheduling policy cannot be completed to the ME.

8. A scheduling apparatus (130), comprising: an acquisition portion (1301), an arrangement portion (1302), a decomposition portion (1303), and an assignment portion (1304), wherein
the acquisition portion (1301) is configured to acquire, after receiving scheduling policy indication information, a scheduling policy from the scheduling policy indication information;
the arrangement portion (1302) is configured to rearrange rows and columns in a Far-End CrossTalk, FEXT, precoding matrix according to the scheduling policy acquired by the acquisition portion;
the decomposition portion (1303) is configured to perform matrix decomposition on the rearranged matrix by adopting a preset matrix decomposition algorithm; and
the assignment portion (1304) is configured to assign a rate to each line pair in a Data Subscriber Line, DSL, based on a matrix decomposition result;
wherein the acquisition portion (1301) is configured to receive a message field carrying the scheduling policy indication information sent by a Management Element, ME; and acquire the scheduling policy based on the scheduling policy indication information in the message field.

9. A scheduling apparatus (130), comprising: a network interface (1401), a memory (1402), and a processor (1403),
wherein the network interface (1401) is configured to receive and send signals in the process of receiving and sending information with other external network elements;
the memory (1402) is configured to store a computer program capable of running on the processor (1403); and
the processor (1403) is configured to perform the steps of the method according to any one of claims 1 to 7 when the computer program is run.

10. A computer storage medium, storing a scheduling program which, when executed by at least one processor, implements the steps of the method according to any one of claims 1 to 7.

## Patentansprüche

1. Planungsverfahren, umfassend:
Erfassen (S401), nach Empfangen von Planungsrichtlinien-Hinweisinformationen, einer Planungsrichtlinie aus den Planungsrichtlinien-Hinweisinformationen;
Neuanordnen (S402) von Zeilen und Spalten in einer FEXT-Vorcodierungsmatrix (FEXT = Far-End CrossTalk) gemäß der erfassten Planungsrichtlinie;
Durchführen (S403) einer Matrixzerlegung an der neu angeordneten Matrix durch Anwenden eines voreingestellten Matrixzerlegungsalgorithmus; und
Zuweisen (S404) einer Rate zu jedem Leitungspaar in einer DSL (DSL = Data Subscriber Line) auf der Grundlage eines Matrixzerlegungsergebnisses;
wobei das Erfassen, nach Empfangen von Planungsrichtlinien-Hinweisinformationen, einer Planungsrichtlinie aus den Planungsrichtlinien-Hinweisinformationen umfasst: Empfangen eines Nachrichtenfeldes, das die durch ein Verwaltungselement (Management Element, ME) gesendeten Planungsrichtlinien-Hinweisinformationen trägt, und Erfassen der Planungsrichtlinie auf der Grundlage der Planungsrichtlinien-Hinweisinformationen in dem Nachrichtenfeld.

2. Verfahren nach Anspruch 1, wobei Inhalt, der der Planungsrichtlinie entspricht, gemäß einer Prioritätsreihenfolge von MRT-Gruppen (MRT = Multi-Remote-Terminal) plant und das Neuanordnen von Zeilen und Spalten in einer FEXT-Vorcodierungsmatrix gemäß der erfassten Planungsrichtlinie umfasst:
Erfassen einer in jeder MRT-Gruppe enthaltenen Leitungspaar-Indexnummer; und
Neuanordnen von Zeilen und Spalten einer FEXT-Vorcodierungsmatrix H_{FEXT} auf der Grundlage der Prioritätsreihenfolge der MRT-Gruppen und der in jeder MRT-Gruppe enthaltenen Leitungspaar-Indexnummer.

3. Verfahren nach Anspruch 1, wobei Inhalt, der der Planungsrichtlinie entspricht, gemäß einer Prioritätsreihenfolge von Benutzern plant und das Neuanordnen von Zeilen und Spalten in einer FEXT-Vorcodierungsmatrix gemäß der erfassten Planungsrichtlinie umfasst:
Neuanordnen von Zeilen und Spalten einer FEXT-Vorcodierungsmatrix H_{FEXT} auf der Grundlage der Prioritätsreihenfolge der Benutzer.

4. Verfahren nach Anspruch 1, wobei Inhalt, der der Planungsrichtlinie entspricht, darin besteht, dass die niedrigste Rate des Benutzers höher als ein voreingestellter Schwellenwert ist, und das Neuanordnen von Zeilen und Spalten in einer FEXT-Vorcodierungsmatrix gemäß der erfassten Planungsrichtlinie umfasst:
Neuanordnen von Zeilen und Spalten einer FEXT-Vorcodierungsmatrix H_{FEXT} gemäß einer Hoch-Niedrig-Reihenfolge des Signal-Rausch-Verhältnisses (Signal-to-Noise Ratio, SNR) von Leitungspaaren.

5. Verfahren nach Anspruch 4, wobei das Verfahren nach dem Zuweisen einer Rate zu jedem Leitungspaar in einer DSL auf der Grundlage eines Matrixzerlegungsergebnisses ferner umfasst:
Übertragen, auf der Grundlage des Matrixzerlegungsergebnisses, eines Nachrichtenfeldes zum Angeben der Implementierungsbeendigung der Planungsrichtlinie an das ME, wenn das Leitungspaar mit dem niedrigsten SNR nicht niedriger als ein voreingestellter Schwellenwert ist; anderenfalls Übertragen eines Nachrichtenfeldes zu dem ME, um anzugeben, dass die Planungsrichtlinie nicht beendet werden kann.

6. Verfahren nach Anspruch 1, wobei Inhalt, der der Planungsrichtlinie entspricht, gemäß einer maximalen Gesamtkapazität aller Leitungspaare plant und das Neuanordnen von Zeilen und Spalten in einer FEXT-Vorcodierungsmatrix gemäß der erfassten Planungsrichtlinie umfasst:
wenn die FEXT-Vorcodierungsmatrix H_{FEXT} Leitungspaare aufweist, die nicht die Anzahl von Bits transportieren, und Leitungspaare aufweist, die die Anzahl von Bits transportieren, die über der maximalen Anzahl transportierbarer Bits liegt, Neuanordnen von Zeilen und Spalten der FEXT-Vorcodierungsmatrix H_{FEXT} gemäß der Hoch-Niedrig-Reihenfolge des SNR und der Reihenfolge, ob die Anzahl von Bits transportiert wird oder nicht; und
wenn die FEXT-Vorcodierungsmatrix H_{FEXT} keine Zeilenpaare aufweist, die nicht die Anzahl von Bits transportieren, oder keine Zeilenpaare aufweist, die die Anzahl von Bits transportieren, die über der maximalen Anzahl transportierbarer Bits liegt, kein Neuanordnen von Zeilen und Spalten der FEXT-Vorcodierungsmaxtrix H_{FEXT}.

7. Verfahren nach Anspruch 6, wobei das Verfahren nach dem Zuweisen einer Rate zu jedem Leitungspaar in einer DSL auf der Grundlage eines Matrixzerlegungsergebnisses ferner umfasst:
Übertragen, auf der Grundlage des Matrixzerlegungsergebnisses, eines Nachrichtenfeldes zum Angeben der Implementierungsbeendigung der Planungsrichtlinie an das ME, wenn die FEXT-Vorcodierungsmatrix H_{FEXT} keine Leitungspaare aufweist, die nicht die Anzahl der Bits transportieren, und keine Leitungspaare aufweist, die die Anzahl von Bits transportieren, die die über der maximalen Anzahl transportierbarer Bits liegt; anderenfalls Übertragen eines Nachrichtenfeldes zum dem ME, um anzugeben, dass die Planungsrichtlinie nicht beendet werden kann.

8. Planungsvorrichtung (130), umfassend: einen Erfassungsabschnitt (1301), einen Anordnungsabschnitt (1302), einen Zerlegungsabschnitt (1303) und einen Zuweisungsabschnitt (1304), wobei
der Erfassungsabschnitt (1301) so konfiguriert ist, dass er nach dem Empfangen von Planungsrichtlinien-Hinweisinformationen eine Planungsrichtlinie aus den Planungsrichtlinien-Hinweisinformationen erfasst;
der Anordnungsabschnitt (1302) so konfiguriert ist, dass er Zeilen und Spalten in einer FEXT-Vorcodierungsmatrix (FEXT = Far-End CrossTalk) gemäß der durch den Erfassungsabschnitt erfassten Planungsrichtlinie neu anordnet;
der Zerlegungsabschnitt (1303) so konfiguriert ist, dass er eine Matrixzerlegung an der neu angeordneten Matrix durchführt, indem er einen voreingestellten Matrixzerlegungsalgorithmus übernimmt; und
der Zuweisungsabschnitt (1304) so konfiguriert ist, dass er jedem Leitungspaar in einer DSL (DSL = Data Subscriber Line) auf der Grundlage eines Matrixzerlegungsergebnisses eine Rate zuweist;
wobei der Erfassungsabschnitt (1301) so konfiguriert ist, dass er ein Nachrichtenfeld empfängt, das die durch ein Verwaltungselement (Management Element, ME) gesendeten Planungsrichtlinien-Hinweisinformationen trägt; und die Planungsrichtlinie auf der Grundlage der Planungsrichtlinien-Hinweisinformationen in dem Nachrichtenfeld erfasst.

9. Planungsvorrichtung (130), umfassend: eine Netzwerkschnittstelle (1401), einen Speicher (1402) und einen Prozessor (1403),
wobei die Netzwerkschnittstelle (1401) so konfiguriert ist, dass sie in dem Prozess des Empfangens und Sendens von Informationen mit anderen externen Netzwerkelementen Signale empfängt und sendet;
der Speicher (1402) so konfiguriert ist, dass er ein Computerprogramm speichert, das auf dem Prozessor (1403) ausführbar ist; und
der Prozessor (1403) so konfiguriert ist, dass er die Schritte des Verfahrens nach einem der Ansprüche 1 bis 7 durchführt, wenn das Computerprogramm ausgeführt wird.

10. Computerspeichermedium, das ein Planungsprogramm speichert, das bei Ausführung durch mindestens einen Prozessor die Schritte des Verfahrens nach einem der Ansprüche 1 bis 7 implementiert.

## Revendications

1. Procédé de planification, comprenant :
l'acquisition (S401), après réception d'informations d'indication de politique de planification, d'une politique de planification à partir des informations d'indication de politique de planification ;
le réagencement (S402) des rangées et des colonnes d'une matrice de précodage de télédiaphonie, FEXT, selon la politique de planification acquise ;
la réalisation (S403) d'une décomposition matricielle sur la matrice réagencée par adoption d'un algorithme prédéfini de décomposition matricielle ; et
l'attribution (S404) d'un débit à chaque paire de lignes d'une ligne d'abonné à des données, DSL, d'après un résultat de décomposition matricielle ;
l'acquisition, après réception d'informations d'indication de politique de planification, d'une politique de planification à partir des informations d'indication de politique de planification comprenant : la réception d'un champ de message transportant les informations d'indication de politique de planification envoyées par un élément de gestion, ME ; et l'acquisition de la politique de planification d'après les informations d'indication de politique de planification du champ de message.

2. Procédé selon la revendication 1, dans lequel le contenu correspondant à la politique de planification est la planification selon un ordre de priorité de groupes de terminaux multidistants, MRT, et le réagencement des rangées et des colonnes d'une matrice de précodage de FEXT selon la politique acquise de planification comprend :
l'acquisition d'un numéro d'indice de paire de lignes inclus dans chaque groupe de MRT ; et
le réagencement des rangées et des colonnes d'une matrice de précodage de FEXT H_{FEXT} d'après l'ordre de priorité des groupes de MRT et le numéro d'indice de paire de lignes inclus dans chaque groupe de MRT.

3. Procédé selon la revendication 1, dans lequel le contenu correspondant à la politique de planification est la planification selon un ordre de priorité des utilisateurs et le réagencement des rangées et des colonnes d'une matrice de précodage de FEXT selon la politique de planification acquise comprend :
le réagencement des rangées et des colonnes d'une matrice de précodage de FEXT H_{FEXT} d'après l'ordre de priorité des utilisateurs.

4. Procédé selon la revendication 1, dans lequel le contenu correspondant à la politique de planification est que le débit le plus bas de l'utilisateur est supérieur à une valeur seuil prédéfinie et le réagencement des rangées et des colonnes d'une matrice de précodage de FEXT selon la politique de planification acquise comprend :
le réagencement des rangées et des colonnes d'une matrice de précodage de FEXT H_{FEXT} selon un ordre de haut en bas du rapport signal sur bruit, SNR, de paires de lignes.

5. Procédé selon la revendication 4, dans lequel après attribution d'un débit à chaque paire de lignes d'une DSL d'après un résultat de décomposition matricielle, le procédé comprend en outre :
la transmission, d'après le résultat de la décomposition matricielle, d'un champ de message permettant d'indiquer l'achèvement de l'implémentation de la politique de planification au ME si la paire de lignes au SNR le plus bas n'est pas inférieure à une valeur seuil prédéfinie ; sinon, la transmission d'un champ de message permettant d'indiquer que la politique de planification ne peut pas être achevée au ME.

6. Procédé selon la revendication 1, dans lequel le contenu correspondant à la politique de planification est la planification selon une capacité globale maximale de toutes les paires de lignes et le réagencement des rangées et des colonnes d'une matrice de précodage de FEXT selon la politique de planification acquise comprend :
lorsque la matrice de précodage de FEXT H_{FEXT} présente des paires de lignes qui ne portent pas le nombre de bits et présente des paires de lignes qui portent le nombre de bits au-delà du nombre de bits supportable maximal, le réagencement de rangées et de colonnes de la matrice de précodage de FEXT H_{FEXT} selon l'ordre de haut en bas du SNR et l'ordre selon lequel le nombre de bits est supporté ou non ; et
lorsque la matrice de précodage de FEXT H_{FEXT} ne présente pas de paires de lignes qui ne portent pas le nombre de bits ou ne présente pas de paires de lignes qui portent le nombre de bits au-delà du nombre de bits supportable maximal, l'absence de réagencement de rangées et de colonnes de le matrice de précodage de FEXT H_{FEXT}.

7. Procédé selon la revendication 6, dans lequel après attribution d'un débit à chaque paire de lignes d'une DSL d'après un résultat de décomposition matricielle, le procédé comprend en outre :
la transmission, d'après le résultat de la décomposition matricielle, d'un champ de message pour indiquer l'achèvement de l'implémentation de la politique de planification au ME si la matrice de précodage de FEXT H_{FEXT} ne présente pas de paires de lignes qui ne portent pas le nombre de bits et ne présente pas de paires de lignes qui portent le nombre de bits au-delà du nombre de bits supportable maximal ; sinon, la transmission d'un champ de message pour indiquer que la politique de planification ne peut pas être achevée au ME.

8. Appareil de planification (130), comprenant : une partie d'acquisition (1301), une partie d'agencement (1302), une partie de décomposition (1303) et une partie d'attribution (1304), dans lequel
la partie d'acquisition (1301) est configurée pour acquérir, après réception d'informations d'indication de politique de planification, une politique de planification à partir des informations d'indication de politique de planification ;
la partie d'agencement (1302) est configurée pour réagencer les rangées et les colonnes d'une matrice de précodage de télédiaphonie, FEXT, selon la politique de planification acquise par la partie d'acquisition ;
la partie de décomposition (1303) est configurée pour effectuer une décomposition matricielle sur la matrice réagencée par adoption d'un algorithme prédéfini de décomposition matricielle ; et
la partie d'attribution (1304) est configurée pour attribuer un débit à chaque paire de lignes d'une ligne d'abonné à des données, DSL, d'après un résultat de décomposition matricielle ;
dans lequel la partie d'acquisition (1301) est configurée pour recevoir un champ de message transportant les informations d'indication de politique de planification envoyées par un élément de gestion, ME ; et acquérir la politique de planification d'après les informations d'indication de politique de planification du champ de message.

9. Appareil de planification (130), comprenant : une interface réseau (1401), une mémoire (1402) et un processeur (1403),
dans lequel l'interface réseau (1401) est configurée pour recevoir et envoyer des signaux lors du processus de réception et d'envoi d'informations avec d'autres éléments externes de réseau ;
la mémoire (1402) est configurée pour stocker un programme informatique susceptible d'être exécuté sur le processeur (1403) ; et
le processeur (1403) est configuré pour exécuter les étapes du procédé selon l'une quelconque des revendications 1 à 7 lors de l'exécution du programme informatique.

10. Support de stockage informatique, stockant un programme de planification qui, lorsqu'il est exécuté par au moins un processeur, implémente les étapes du procédé selon l'une quelconque des revendications 1 à 7.
